# EUROPÄISCHE PATENTSCHRIFT

(11) **EP 0 791 143 B1**
(45) Veröffentlichungstag und Bekanntmachung des Hinweises auf die Patenterteilung: **23.09.1998**
(21) Anmeldenummer: 95938393.6
(22) Anmeldetag: 03.11.1995
(51) Int. Cl.: F16D 65/092

(54) **SCHEIBENBREMSBELAG MIT DÄMPFUNGSBLECH**
DISC-BRAKE LINING WITH NOISE-DAMPING PLATE
GARNITURE DE FREIN A DISQUES A TOLE D'INSONORISATION

(30) Priorität: 10.11.1994 DE 9417974 U; 03.03.1995 DE 29503656 U
(43) Veröffentlichungstag der Anmeldung: 27.08.1997
(73) Patentinhaber: Rütgers Automotive Aktiengesellschaft, 45356 Essen (DE)
(72) Erfinder: VERBEETEN, Wilhelm, D-40724 Hilden (DE); ECKERT, Armin, D-45731 Waltrop (DE)
(74) Vertreter: Hosbach, Hans Ulrich, Dipl.-Ing.
(86) Internationale Anmeldenummer: EP9504310
(87) Internationale Veröffentlichungsnummer: WO9615386

(56) Entgegenhaltungen:
- EP-A- 0 072 192
- EP-A- 0 112 255
- EP-A- 0 138 081
- EP-A- 0 139 890
- EP-A- 0 373 333
- EP-A- 0 636 807
- WO-A-92/14945
- DE-A- 4 208 003
- DE-A- 4 332 709
- DE-C- 434 051
- DE-C- 2 930 601
- DE-C- 4 104 812
- DE-C- 4 142 196
- DK-C- 42 876
- FR-A- 123 784
- US-A- 4 467 897

## Beschreibung

Die Erfindung betrifft einen Scheibenbremsbelag mit Geräuschdämpfungsblech und dessen Befestigung auf der Belagträgerplatte. Insbesondere betrifft die Erfindung einen Scheibenbremsbelag nach den Oberbegriffen der Patentansprüche 1 bzw. 5.

Geräuschdämpfungsbleche werden meist mit kalt- oder heißklebenden Polymerschichten auf der dem Reibbelag abgewandten Seite der Belagträgerplatte aufgeklebt. Die Art dieser Polymerschicht ist wesentlich für die Dämpfungseigenschaften des Blechs. Viscoelastische Polymere begünstigen die Dämpfungseigenschaften des Blechs und werden bevorzugt eingesetzt. Derartige Polymerschichten sind jedoch temperaturempfindlich und können bei hohen Temperaturen die beim Bremsen entstehenden Scherkräfte häufig nicht in ausreichendem Maße übertragen. Zusätzlich werden daher Mittel vorgesehen, welche die Bleche gegen seitliches Verrutschen sichern. Zu derartigen scherkräfteaufnehmenden Mitteln gehören nach dem Stand der Technik umgebördelte Dämpfungsblechansätze, welche die Seitenflächen der Trägerplatten umgreifen. Außerdem ist es bekannt, das Dämpfungsblech in Ausnehmungen der Trägerplatte einzupressen. Die bei diesen bekannten Lösungen hergestellte Verbindung zwischen Trägerplatte und Dämpfungsblech hatte unter bestimmten Bedingungen und Belastungen noch nicht die gewünschte Zuverlässigkeit.

Aus der EP-A 0 373 333 ist es bekannt, das Geräuschdämpfungsblech gemeinsam mit einer Haltefeder auf der Trägerplatte aufzunieten und mit Hilfe örtlicher Vertiefungen oder Führungsfahnen, die in die entsprechende Trägerplattenausnehmung eingreifen, gegen Verdrehen zu sichern. Der Kopf des Niets steht bei dieser bekannten Konstruktion aus der Dämpfungsblechebene nach außen vor und kann die Funktion der Anpreßvorrichtungen der Bremse beeinträchtigen. Es kann eine Schwingungsbrücke durch eine metallische Verbindung zwischen Trägerplatte und Dämpfungsblech gebildet werden, wodurch die Dämpfungseigenschaften verschlechtert werden. Auf die Bedeutung solcher Schwingungsbrücken wird in der DE-A 41 04 812 hingewiesen.

Der Erfindung liegt die Aufgabe zugrunde, einen mit Dämpfungsblech versehenen Scheibenbremsbelag zur Verfügung zu stellen, bei dem eine ausreichend feste und zuverlässige Verbindung zwischen Trägerplatte und Dämpfungsblech ohne spürbare Nebeneffekte hergestellt wird.

Bei einem Scheibenbremsbelag mit einer Belagträgerplatte, einem auf einer Seite der Belagträgerplatte aufgepreßten Reibbelag, einem auf der anderen Seite der Belagträgerplatte durch eine Kleberschicht befestigten Geräuschdämpfungsblech und mit Scherkräfte aufnehmenden Mitteln zur Sicherung des Geräuschdämpfungsbleches gegen seitliches Verrutschen, wobei die Belagträgerplatte wenigstens zwei mit Underlayermasse und/oder Reibmasse gefüllte Durchgangsöffnungen aufweist, wird diese Aufgabe erfindungsgemäß dadurch gelöst, daß die Durchgangsöffnungen jeweils mit einer Senkbohrung versehen sind; daß das Dämpfungsblech in Ausrichtung mit den Senkbohrungen gelocht und konisch verformt ist; und daß eine Senkschraube in jede Senkbohrung derart eingeschraubt ist, daß ihr Kopf den mit der Senkbohrung ausgerichteten und konisch verformten Teil des Dämpfungsblechs in den erweiterten Teil der Senkbohrung einzieht, wobei die Kleberschicht zwischen Dämpfungsblech und erweitertem Teil der Senkbohrung unter Druck steht und der Schraubenkopf der Senkschraube in dem konisch verformten Teil des Dämpfungsblechs vollständig eingetaucht ist.

Da die Underlayermasse bzw. die Reibmasse selbst schon schwingungsdämpfend wirkt und die freie Oberfläche des Dämpfungsblechs mit einem Lack versehen ist, entstehen in der Regel keine Schwingungsbrücken. Eine zusätzliche Schwingungsdämpfungswirkung kann dadurch erzielt werden, daß zwischen Schraubenkopf und Dämpfungsblech eine Dämpfungsscheibe, z.B. eine solche aus einem hochtemperaturbeständigen Kautschuk eingefügt und/oder der Schraubenkopf mit einem Dämpfungslack beschichtet ist. Eine andere Möglichkeit zur Erzielung zusätzlicher Dämpfungseigenschaften besteht darin, die Senkschraube in die Senkbohrung mit einem elastischen Kleber einzukleben.

Für Scheibenbremsbeläge ohne Haltefeder, jedoch mit aufgenieteter Ratterschutzfeder, besteht die erfindungsgemäße Lösung der obengenannten Aufgabe in den Merkmalen des Patentanspruchs 5.

Das Dämpfungsblech ist nach dieser Erfindungsalternative durch das die Ratterschutzfeder haltende Niet auf der Belagträgerplatte befestigt und gegen Ablösen und Verschieben gesichert. Die Drehsicherung des Dämpfungsblechs gegenüber der Trägerplatte ist in bevorzugter Weiterbildung der Erfindung durch eine formschlüssige Verbindung zwischen beiden gewährleistet. In Weiterbildung der Erfindung ist die formschlüssige Verbindung durch besondere Ausgestaltung der Nietverbindung hergestellt. Dabei haben die Ausnehmungen in der Belagträgerplatte und im Dämpfungsblech nicht-kreisförmige Querschnitte. Das mit der Ratterschutzfeder versehene Hohlniet wird in diese nicht-kreisförmigen Ausnehmungen gesteckt und eingenietet, wodurch das Hohlniet in Anpassung an die Form der Ausnehmungen verformt wird, sofern nicht Hohlniete mit entsprechendem nicht-kreisförmigem Querschnitt verwendet werden. Auf diese Weise wird verhindert, daß sich das Dämpfungsblech um das Niet auf der Trägerplatte verdrehen kann. Einen Verdrehschutz in Verbindung mit gesetzten Hohlnieten bieten Ausnehmungen die beispielsweise mit ovalen, polygonförmigen,eckigen oder ebenen Abschnitten versehen sind.

Im folgenden wird die Erfindung anhand von in der Zeichnung schematisch dargestellten Ausführungsbeispielen näher erläutert. In der Zeichnung zeigen:
- Fig. 1: eine vergrößerte Teilschnittansicht aus dem Scheibenbremsbelag mit der Befestigung des Dämpfungsbleches gemäß einem ersten Ausführungsbeispiel der Erfindung;
- Fig. 2: eine Draufsicht auf die dem Reibbelag abgewandte und ein Dämpfungsblech tragende Seite des Bremsbelages gemäß einem alternativen Ausführungsbeispiel der Erfindung; und
- Fig. 3: eine Seitenansicht des in Fig. 2 gezeigten Bremsbelages.

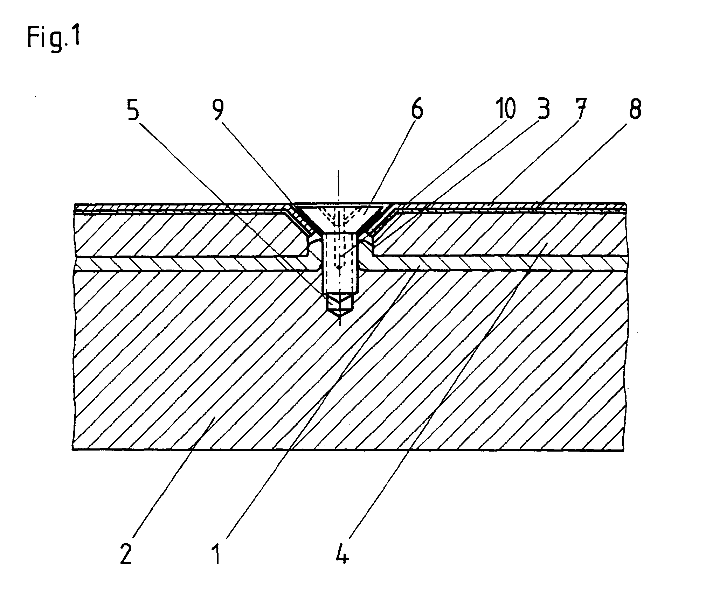

Bei dem in Fig. 1 in Teildarstellung gezeigten Scheibenbremsbelag sind eine Underlayerschicht 1 und eine Reibmasseschicht 2 auf eine Belagträgerplatte 4 heiß aufgepreßt. Während dieses Preßvorgangs werden runde Durchgangsöffnungen 3, die in der Trägerplatte angeordnet sind, teilweise von den Massen der Schichten 1 und 2 ausgefüllt. In die teilweise verfüllte Durchgangsöffnung 3 ist eine als Sackloch ausgebildete Senkbohrung 5 gebohrt, die nach außen hin konisch erweitert ist und etwa 3 mm in die Reibmassenschicht 2 hineinragt. Auf der Oberfläche der Belagträgerplatte 4 ist ein Dämpfungsblech 7 mit einer kaltklebenden Polymerschicht 8 aufgeklebt. Das Dämpfungsblech 7 ist in Ausrichtung mit der Senkohrung 5 gelocht und derart konisch verformt, daß sein konisch verformter Bereich in den erweiterten Teil der Senkbohrung 5 paßt und innen ausreichend Platz für die Aufnahme des kegelstumpfförmigen Kopfs einer Senkschraube 6 bietet. Die Senkschraube 6 ist in dem beschriebenen Ausführungsbeispiel eine selbstschneidende Messing-Blechschraube mit Kreuzschlitz. Sie wird zusammen mit einer Unterlegscheibe 9 aus Nitrilkautschuk in die Senkbohrung 5 eingeschraubt und preßt dabei das Dämpfungsblech 7 mit der Polymerschicht 8 gegen den konisch erweiterten Teil der Senkbohrung 3 in der Belagträgerplatte 4. Das Dämpfungsblech 7 ist mit zwei solchen Senkschrauben an der Trägerplatte 4 befestigt und dadurch sowohl gegen Verschieben als auch gegen Verdrehen gesichert, ohne daß dabei Schwingungsbrücken entstehen können.

Wie in Fig. 1 zu sehen ist, sind die Größe des Schraubenkopfs und die Einschraubtiefe der Senkschraube 6 so bemessen, daß der Schraubenkopf in der Einbaustellung vollständig in den konisch verformten Teil des Dämpfungsblechs 7 eintaucht, also nicht über die Außenebene des Dämpfungsblechs vorsteht.

Die Senkschraube 6 weist eine vom Kreuzschlitz ausgehende axiale Sackbohrung 10 auf, die als Steckkontakt für einen Verschleißanzeiger dient. Die Senkschraube 6 muß dabei aus einem gut leitenden Material, wie Kupfer oder Messing bestehen und so tief in die Reibmasse eingeschraubt sein, daß der Kontakt zur Bremsscheibe durch Abnutzung des Reibbelages hergestellt wird, bevor die Reibmasse völlig abgetragen wird.

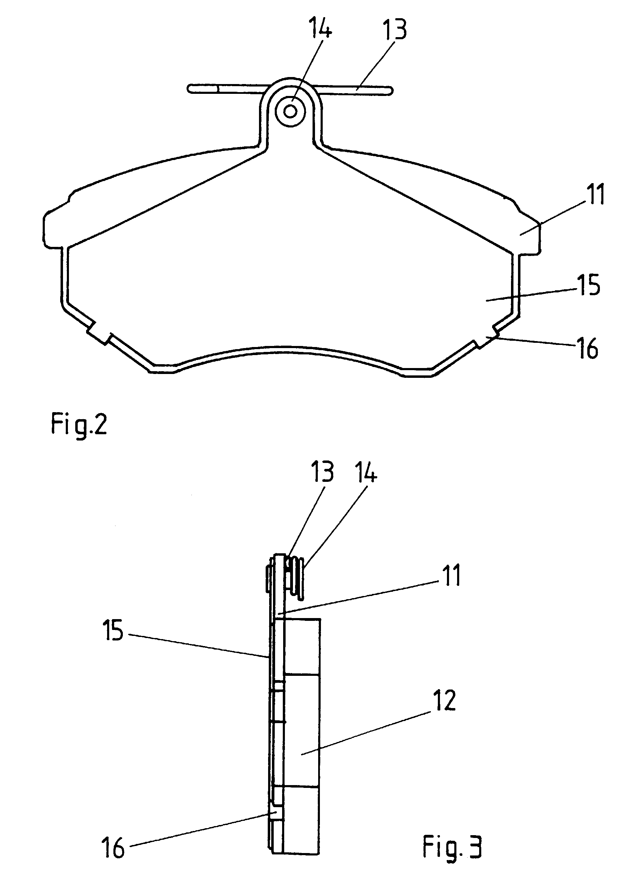

Der in den Fig. 2 und 3 schematisch dargestellte Bremsbelag gemäß einem alternativen Ausführungsbeispiel der Erfindung weist eine vorzugsweise aus Stahl bestehende Belagträgerplatte 11 auf, auf deren einer Seite ein Reibbelag 12 in solcher Anordnung aufgepreßt ist, daß ein Oberflächenabschnitt für eine Federbefestigung freibleibt. Auf der gegenüberliegenden Seite ist ein Dämpfungsblech 15 mit einem viscoelastischen, temperaturbeständigen Kleber aufgeklebt. Das Dämpfungsblech 15 läuft nach oben in eine durchbohrte Zunge aus und weist seitlich zwei Führungsfahnen 16 auf. Sowohl in der Trägerplatte 11 als auch im Dämpfungsblech 15 sind zueinander ausgerichtete Bohrungen gleichen Querschnitts angeordnet. Ein mit einer aufgesteckten Ratterschutzfeder 13 versehenes Hohlniet 14 wird durch diese ausgerichteten Bohrungen gesteckt und auf der Seite des Dämpfungsblechs 15 umgebördelt. Die etwa um die Trägerplattendicke vorstehenden Führungsfahnen 16 sind in Richtung des Reibbelages 12 um die Ränder der Trägerplatte 11 umgebogen.

Anstelle von Bohrungen in der Trägerplatte 11 und dem Dämpfungsblech 15 können unrunde Öffnungen vorgesehen sein, die in Verbindung mit einem eingepaßten Nietschaft eine Verdrehsicherung zwischen Belagträgerplatte 11 und Dämpfungsblech 15 herstellen.

## Patentansprüche

1. Scheibenbremsbelag mit einer Belagträgerplatte (4), einem auf einer Seite der Belagträgerplatte (4) aufgepreßten Reibbelag (2), einem auf der anderen Seite der Belagträgerplatte (4) durch eine Kleberschicht (8) befestigten Geräuschdämpfungsblech (7) und mit Scherkräfte aufnehmenden Mitteln zur Sicherung des Geräuschdämpfungsbleches (7) gegen seitliches Verrutschen,
wobei die Belagträgerplatte wenigstens zwei mit Underlayermasse (1) und/oder Reibmasse (2) gefüllte Durchgangsöffnungen (3) aufweist,
**dadurch gekennzeichnet**,
daß die Durchgangsöffnungen (3) jeweils mit einer Senkbohrung (5) versehen sind;
daß das Dämpfungsblech (7) in Ausrichtung mit den Senkbohrungen (5) gelocht und konisch verformt ist; und
daß eine Senkschraube (6) in jede Senkbohrung (5) derart eingeschraubt ist, daß ihr Kopf den mit der Senkbohrung ausgerichteten und konisch verformten Teil des Dämpfungsblechs (7) in den erweiterten Teil der Senkbohrung (5) einzieht, wobei die Kleberschicht (8) zwischen Dämpfungsblech (7) und erweitertem Teil der Senkbohrung (5) unter Druck steht und der Schraubenkopf der Senkschraube (6) in dem konisch verformten Teil des Dämpfungsblechs (7) vollständig eingetaucht ist.

2. Scheibenbremsbelag nach Anspruch 1, dadurch gekennzeichnet, daß die Senkschraube (6) in die Senkbohrung (5) eingeklebt ist.

3. Scheibenbremsbelag nach Anspruch 1 oder 2, dadurch gekennzeichnet, daß zwischen Schraubenkopf und Dämpfungsblech (7) eine Unterlegscheibe (9) angeordnet ist.

4. Scheibenbremsbelag nach einem der Ansprüche 1 bis 3, dadurch gekennzeichnet, daß die Senkschraube (6) mit einer nach außen offenen Bohrung (10) versehen ist und mit ihrem Schraubende in die Reibmassenschicht (2) hineinragt.

5. Scheibenbremsbelag mit einer Belagträgerplatte (11), einem Reibbelag (12), der auf einer ersten Seite der Belagträgerplatte (11) derart angeordnet ist, daß ein Teil der ersten Seite belagfrei bleibt, ferner mit einer Ratterschutzfeder (13) und mit einem Dämpfungsblech (15), das auf einer dem Reibbelag (12) abgewandten zweiten Seite der Belagträgerplatte (11) aufgeklebt ist und gemeinsam mit der Ratterschutzfeder (13) auf der Belagträgerplatte (11) befestigt ist,
**dadurch gekennzeichnet,**
daß die Ratterschutzfeder (13) auf oder in dem reibbelagfreien Teil auf der ersten Seite der Belagträgerplatte (11) angeordnet ist; und
daß das dem Dämpfungsblech (15) und der Ratterschutzfeder (13) gemeinsame Befestigungsmittel ein die Belagträgerplatte (11) durchgreifendes Niet (14) ist.

6. Scheibenbremsbelag nach Anspruch 5, dadurch gekennzeichnet, daß das Niet (14) ein Hohlniet ist.

7. Scheibenbremsbelag nach Anspruch 5 oder 6, dadurch gekennzeichnet, daß das Dämpfungsblech (15) mittels einer formschlüssigen Verbindung mit der Belagträgerplatte (11) gegen Verdrehen gesichert ist.

8. Scheibenbremsbelag nach Anspruch 7, dadurch gekennzeichnet, daß das Dämpfungsblech (15) mit mindestens einer Führungsfahne (16) versehen ist, die um den Rand der Belagträgerplatte (11) gebogen ist.

9. Scheibenbremsbelag nach den Ansprüchen 6 und 7, dadurch gekennzeichnet, daß das Hohlniet (14) in nicht-kreisförmige Öffnungen der Belagträgerplatte (11) und des Dämpfungsblechs (15) eingepaßt ist.

## Claims

1. Disc brake lining with a lining support plate (4), a friction lining (2) pressed onto one side of the lining support plate (4), a noise-damping plate (7) fastened to the other side of the lining support plate (4) by means of an adhesive layer (8) and with means absorbing shear forces for securing the noise-damping plate (7) against lateral slipping,
the lining support plate having at least two through holes (3) filled with underlayer composition (1) and/or friction composition (2)
characterised in that
the through openings (3) are each provided with a countersunk bore (5);
that the noise-damping plate (7) has holes and is conically deformed in alignment with the countersunk bores (5); and
that a countersunk screw (6) is screwed into each countersunk bore (5) such that its head draws the portion of the noise-damping plate (7) which is conically deformed and is aligned with the countersunk bore into the broadened portion of the countersunk bore (5), whereby the adhesive layer (8) between the noise-damping plate (7) and the broadened portion of the countersunk bore (5) is under pressure and the head of the countersunk screw (6) is completely accommodated in the conically deformed portion of the noise-damping plate (7).

2. Disc brake lining as claimed in Claim 1, characterised in that the countersunk screw (6) is secured in the countersunk bore (5) by adhesive.

3. Disc brake lining as claimed in Claim 1 or 2, characterised in that a washer (9) is arranged between the screw head and the noise-damping plate (7).

4. Disc brake lining as claimed in one of Claims 1 to 3, characterised in that the countersunk screw (6) is provided with an outwardly open bore (10) and its screw end projects into the friction composition layer (2).

5. Disc brake lining with a lining support plate (11), a friction lining (12), which is so arranged on one side ofthe lining support plate (11) that a portion of the first side is free of lining, and with a chatter prevention spring (13) and with a noise-damping plate (15), which is fastened to the second side of the lining support plate (11) remote from the friction lining (12) by adhesive and is secured together with the chatter prevention spring (13) to the lining support plate (11), characterised in that
the chatter prevention spring (13) is arranged on or in the portion on the first side of the lining support plate (11) which is free of the lining; and
that the fastening means common to the noise-damping plate (15) and the chatter prevention spring (13) is a rivet (14) extending through the lining support plate (11).

6. Disc brake lining as claimed in Claim 5, characterised in that the rivet (14) is a hollow rivet.

7. Disc brake lining as claimed in Claim 5 or 6, characterised in that the noise-damping plate (15) is secured against rotation by means of a form-locking connection with the lining support plate (11).

8. Disc brake lining as claimed in Claim 7, characterised in that the noise-damping plate (15) is provided with at least one guide lug (16) which is bent around the edge of the lining support plate (11).

9. Disc brake lining as claimed in Claim 6 and 7, charakterised in that the hollow rivet (14) is fitted into non-circular openings in the lining support plate (11) and the noise-damping plate (15).

## Revendications

1. Garniture pour frein à disque avec une plaque support de garniture (4), une garniture de frottement (2) appliquée par pressage sur une face de la plaque support de garniture (4), une tôle d'amortissement de bruit (7) fixée sur l'autre face de la plaque support de garniture (4), par une couche d'adhésif (8), et avec des moyens supportant les efforts de cisaillement en vue d'assurer la tôle d'amortissement de bruit (7) contre tout ripage latéral,
la plaque support de garniture présentant au moins deux ouvertures de passage (3) remplies d'une masse sous-jacente (1) et/ou d'une masse de frottement (2),
caractérisée par le fait que les ouvertures de passage (3) sont chacune pourvues d'un trou à embouchure fraisée (5),
que la tôle d'amortissement (7) est perforée dans la direction des trous à embouchure fraisée (5) et est dotée d'une forme conique, et
qu'une vis à tête fraisée (6) est vissée dans chaque trou à embouchure fraisée (5), de manière que sa tête tire la partie, orientée comme le trou à embouchure fraisée et à forme conique de la tôle d'amortissement (7) dans la partie élargie du trou à embouchure fraisée (5), la couche d'adhésif (8) entre la tôle d'amortissement (7) et la partie élargie du trou à embouchure fraisée (5) étant placée sous pression et la tête de vis appartenant à la vis à tête fraisée (6) étant complètement plongée dans la partie à déformation conique de la tôle d'amortissement (7).

2. Garniture pour frein à disque selon la revendication 1, caractérisée par le fait que la vis à tête fraisée (6) est collée dans le trou à embouchure fraisée (5).

3. Garniture pour frein à disque selon la revendication 1 ou 2, caractérisée par le fait qu'une rondelle plate (9) est disposée entre la tête de vis et la tôle d'amortissement (7).

4. Garniture pour frein à disque selon l'une des revendications 1 à 3, caractérisée par le fait que la vis à tête fraisée (6) est pourvue d'un perçage (10) ouvert vers l'extérieur et pénètre dans la couche de masse de frottement (2) par son extrémité de vis.

5. Garniture pour frein à disque comportant une plaque support de garniture (11), une garniture de frottement (12) disposée sur une première face de la plaque support de garniture (11) de manière qu'une partie de la première face reste exempte de garniture, en outre avec un ressort de protection anti-vibrations (13) et avec une tôle d'amortissement (15), qui est collée sur une deuxième face, opposée à la garniture de frottement (12), de la plaque support de garniture (11) et est fixée sur la plaque support de garniture (11) conjointement avec le ressort de protection anti-vibrations (13);
caractérisée par le fait que le ressort de protection anti-vibrations (13) est disposé sur ou dans la partie exempte de garniture de frottement sur la première face de la plaque support de garniture (11);
et que des moyens de fixation, communs à la tôle d'amortissement (15) et aux ressorts de protection anti-vibrations (13), sont constitués par un rivet (14) traversant la plaque support de garniture (11).

6. Garniture pour frein à disque selon la revendication 5, caractérisée par le fait que le rivet (14) est un rivet creux.

7. Garniture pour frein à disque selon la revendication 5 ou la revendication 6, caractérisée par le fait que la tôle d'amortissement (15) est assurée contre la rotation au moyen d'une liaison avec ajustement de forme avec la plaque support de garniture (11).

8. Garniture pour frein à disque selon la revendication 7, caractérisée par le fait que la tôle d'amortissement (15) est pourvue d'au moins un fanion de guidage (16) plié autour du bord de la plaque support de garniture (11).

9. Garniture pour frein à disque selon les revendications 6 et 7, caractérisée par le fait que le rivet creux (14) est ajusté dans des ouvertures à forme non-circulaire appartenant à la plaque support de garniture (11) et à la tôle d'amortissement (15).
